# EUROPEAN PATENT APPLICATION

(11) **EP 4 432 727 A1**
(43) Date of publication of application: **18.09.2024**
(21) Application number: 22903174.5
(22) Date of filing: 18.11.2022
(51) Int. Cl.: H04W 36/00

(54) **BASE STATION HANDOVER METHOD, COMMUNICATION NETWORK ARCHITECTURE, CONTROLLER, AND READABLE STORAGE MEDIUM**

(30) Priority: 10.12.2021 CN 202111508749
(71) Applicant: ZTE Corporation, Shenzhen, Guangdong 518057 (CN)
(72) Inventor: WANG, Xiyu, Shenzhen, Guangdong 518057 (CN); HUANG, Xueying, Shenzhen, Guangdong 518057 (CN)
(74) Representative: Savi, Massimiliano
(86) International application number: PCT/CN2022/132946
(87) International publication number: WO 2023/103751

(57) **Abstract**

Disclosed in the present application are a base station handover method, a communication network architecture, a controller, and a readable storage medium. The base station handover method comprises: a user terminal generating a channel resource report, and sending the channel resource report to a source base station (S200); the source base station generating a handover instruction according to the channel resource report, and sending the handover instruction to a target base station (S210), wherein the handover instruction carries an AMF identifier; the target base station acquiring, according to the AMF identifier in the handover instruction, a first connectivity condition between the target base station and an AMF corresponding to the AMF identifier (S220); and the target base station executing, according to the first connectivity condition, handover processing by using a corresponding preset handover mode (S230).

## Description

### CROSS-REFERENCE TO RELATED APPLICATION

This application is filed on the basis of the Chinese patent application No. 202111508749.3 filed December 10, 2021, and claims priority of the Chinese patent application, the entire contents of which are incorporated herein by reference.

### TECHNICAL FIELD

The present disclosure relates to the field of telecommunication, and in particular to a method for handover between base stations, a telecommunication network architecture, a controller, and a readable storage medium.

### BACKGROUND

According to the current 3GPP protocol, when the source base station determines that the target base station and the source base station are connected to the same Access and Mobility Management Function (AMF) area, the source base station can initiate Xn handover and carry the serving AMF information of the UE. The target base station selects the original serving AMF to perform the handover. Under the current protocol, after the source base station initiates the handover to the target base station, the Xn handover fails because the link between the target base station and the first AMF fails and the Xn handover cannot go across the AMFs. In such a case, it is necessary to trigger the NG handover again. The NG handover process will also fail due to the link failure between the first AMF and the target base station. As a result, the UE cannot initiate handover, and may encounter network disconnection, which will affect the user experience and system indicators.

### SUMMARY

The following is a summary of the subject matter described herein. This summary is not intended to limit the scope of protection of the claims.

Provided are a method for handover between base stations, a telecommunication network architecture, a controller, and a readable storage medium, in which two AMFs are respectively deployed as backup AMFs for each other.

According to an embodiment of the present disclosure, a method for handover between base stations is provided. The method is applied to a telecommunication network architecture including a user equipment (UE), a source base station, a first access and mobility management function (AMF), a target base station, and a second AMF. The source base station is connected with the UE, the first AMF is connected with the source base station, the first AMF is the serving AMF of the UE, the second AMF and the first AMF are backup AMFs for each other, the target base station is connected with the second AMF and the source base station, and the target base station is disconnected from the first AMF. The method includes, generating, by the UE, a channel resource report, and sending by the UE, the channel resource report to the source base station; generating, by the source base station, a handover command according to the channel resource report, and sending, by the source base station, the handover command to the target base station, where the handover command carries an AMF identifier; acquiring, by the target base station, a first connectivity status between the target base station and an AMF corresponding to the AMF identifier according to the AMF identifier carried in the handover command; and performing a handover, by the target base station, by adopting a corresponding preset handover method according to the first connectivity status.

According to an embodiment of the present disclosure, a telecommunication network architecture is provided. The architecture includes a user equipment (UE), a source base station, a first access and mobility management function (AMF), a target base station, and a second AMF. The source base station is connected with the UE, the first AMF is connected with the source base station, the first AMF is the serving AMF of the UE, the second AMF and the first AMF are backup AMFs for each other, the target base station is connected with the second AMF and the source base station, and the target base station is disconnected from the first AMF. The UE is configured to generate a channel resource report and send the channel resource report to the source base station.

The source base station is configured to generate a handover command according to the channel resource report and send the handover command to the target base station; and the handover command carries an AMF identifier. The target base station is configured to obtain according to the AMF identifier carried in the handover command, the first connectivity status between the target base station and the AMF corresponding to the AMF identifier. The target base station is configured to perform a handover by adopting a corresponding preset handover method according to the first connectivity status .

According to an embodiment of the present disclosure, a controller is provided. The controller includes a memory, a processor, and a computer program stored in the memory and executable by the processor which, when executed by the processor causes the processor to carry out the method as described above.

An embodiment of the present disclosure further provides a computer-readable storage medium storing thereon a computer-executable instruction which, when executed by a processor, causes the processor to carry out the method as described above.

Other features and advantages of the present disclosure will be illustrated in the following description, and in part will be apparent from the description, or may be understood by practicing the present disclosure. The objects and other advantages of the present disclosure can be achieved and obtained by the structure particularly set forth in the description, claims, and drawings.

### BRIEF DESCRIPTION OF DRAWINGS

The drawings are intended to provide a further understanding of the technical scheme of the present disclosure, and constitute a part of the specification, and they are intended to illustrate the technical scheme of the present disclosure in conjunction with the embodiments of the present disclosure, but are not intended to limit the technical scheme of the present disclosure.
FIG. 1 depicts a schematic diagram showing a system architecture platform in which a method for handover between base stations according to an embodiment of the present disclosure is carried out;
FIG. 2 depicts a flowchart showing a method for handover between base stations according to an embodiment of the present disclosure;
FIG. 3 depicts a flowchart showing a method for handover between base stations according to another embodiment of the present disclosure;
FIG. 4 depicts a flowchart showing a method for handover between base stations according to another embodiment of the present disclosure;
FIG. 5 depicts a flowchart showing a method for handover between base stations according to another embodiment of the present disclosure;
FIG. 6 depicts a flowchart showing a method for handover between base stations according to another embodiment of the present disclosure;
FIG. 7 depicts a flowchart showing a method for handover between base stations according to another embodiment of the present disclosure;
FIG. 8 depicts a schematic diagram showing a base station and an AMF according to an embodiment of the present disclosure;
FIG. 9 depicts a schematic diagram showing a telecommunication network architecture according to an embodiment of the present disclosure;
FIG. 10 depicts a flowchart showing the overall process of a method for handover between base stations according to an embodiment of the present disclosure;
FIG. 11 depicts a flowchart showing the overall process of a method for handover between base stations according to another embodiment of the present disclosure;
FIG. 12 depicts a flowchart showing the overall process of a method for handover between base stations according to another embodiment of the present disclosure; and
FIG. 13 depicts a flowchart showing the overall process of a method for handover between base stations according to yet another embodiment of the present disclosure.

### DETAILED DESCRIPTION

The purpose, technical scheme, and advantages of the present disclosure will become apparent through the following description for various embodiments in conjunction with the drawings. It should be understood that the embodiments described here are intended for illustration but not limitation of the present disclosure.

It should be understood that in the description of embodiments of the present disclosure, the term "several" means one or more. The term "plurality" means two or more. Terms "greater than", "less than", "more than", etc. shall be understood to exclude the number being referred to. Terms "above", "below", "within", etc. shall be understood to include the number being referred to. The terms "first" and "second" if described, are intended for distinguishing technical features, which shall not be understood as indicating or implying relative importance or implicitly indicating the number of the indicated technical features or the order of the indicated technical features.

In the description of various embodiments of the present disclosure, terms such as provide, mount, or connect should be broadly understood, unless otherwise specified, and a person having ordinary skills in the art can reasonably determine the specific meanings of the above terms in various embodiments of the present disclosure in conjunction with the specific contents of the technical scheme.

According to the current 3GPP protocol, when the source base station determines that the target base station and the source base station are connected to the same AMF area, the source base station can initiate Xn handover and carry the serving AMF information of the UE. The target base station selects the original serving AMF to perform the handover. Under the current protocol, after the source base station initiates the handover to the target base station, the Xn handover fails because the link between the target base station and the first AMF fails and the Xn handover cannot go across the AMFs. In such a case, it is necessary to trigger the NG handover again. The NG handover process will also fail due to the link failure between the first AMF and the target base station. As a result, the UE cannot initiate handover, and may encounter network disconnection, which will affect the user experience and system indicators.

In order to at least address the problems that the success rate in the current handover between base stations process is low, and the user experience is low due to network disconnection of the UE, a method for handover between base stations, a telecommunication network architecture, a controller, and a readable storage medium are provided. The method is applied to the telecommunication network architecture including a UE, a source base station, a first AMF, a target base station, and a second AMF. The source base station is connected to the UE. The first AMF is connected with the source base station. The first AMF is the serving AMF of the UE. The second AMF and the first AMF are backup AMFs for each other. The target base station is connected to the second AMF and the source base station. The target base station is disconnected from the first AMF. Before the handover, the UE finds that the cell channel condition of the target base station is better, and generates and sends the channel resource report to the source base station to indicate that the cell channel condition of the target base station is better. The source base station receives a channel resource report from the UE and generates a handover command, and sends the generated handover command to the target base station. The handover command carries an AMF identifier. The target base station obtains a first connectivity status with the corresponding AMF according to the AMF identifier in the received handover command, and performs handover between base stations by adopting a corresponding preset handover method through the obtained first connectivity status. If it is determined that the target base station is disconnected from the first AMF but is connected to the second AMF, Xn handover can be performed based on the second AMF since the first AMF and the second AMF are backup AMFs for each other. Thus, the success of the handover is ensured and a good user experience is ensured. The signaling impact caused by turning to NG handover is avoided. If it is determined that the first AMF is disconnected from the first AMF, but the first connectivity status with the second AMF is unknown, the second AMF informs the target base station to perform NG handover. In this way, the network failure of the UE due to the handover failure between base stations caused by the disconnection of the first AMF from the target base station is prevented. The success rate of handover between base stations is improved, and the user experience is enhanced.

Some embodiments of the present disclosure will be further illustrated with reference to the drawings.

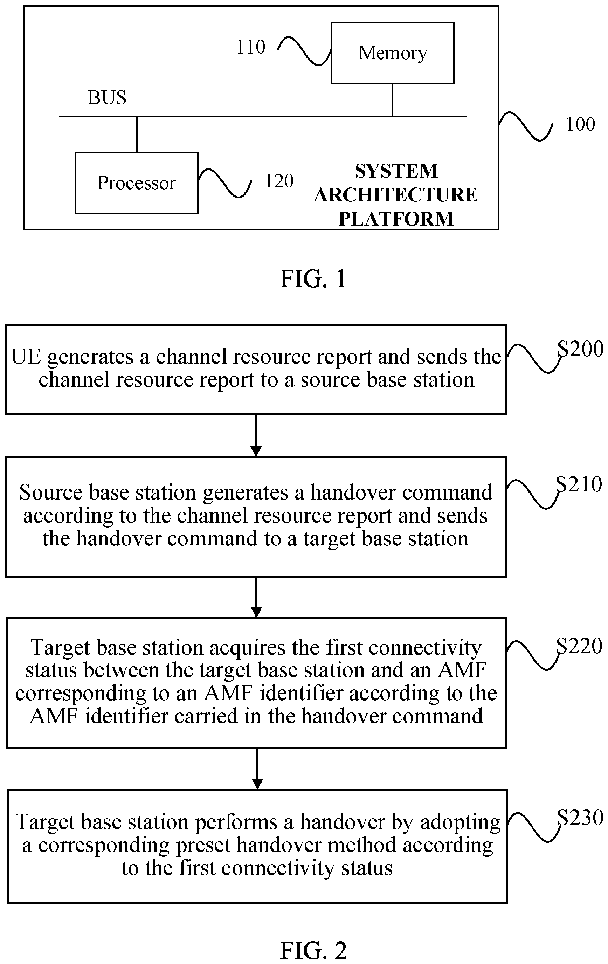

FIG. 1 depicts a schematic diagram showing a system architecture platform in which a method for handover between base stations according to an embodiment of the present disclosure is carried out.

According to an embodiment, the system architecture platform 100 includes one or more processors 110 and a memory 120, while one processor 110 and one memory 120 are shown in FIG. 1 by way of an example.

The processor 110 and the memory 120 may be connected by a bus or other means. The connection is shown as a bus by way of an example in FIG. 1.

As a non-transitory computer-readable storage medium, the memory 120 can be configured to store non-transitory software programs and non-transitory computer-executable programs. In addition, the memory 120 can include high-speed random-access memory and non-transitory memory, such as at least one disk memory device, a flash memory device, or other non-transitory solid-state memory devices. In some embodiments, the memory 120 may include the memory 120 remotely arranged with respect to the processor 110, and the remote memory may be connected to the system architecture platform 100 through a network. Examples of the above networks include, but are not limited to, the Internet, intranet, local area network, mobile communication network, and combinations thereof.

It can be understood by those having ordinary skills in the art that the device shown in FIG. 1 does not constitute a limitation to the system architecture platform 100 which may include more or less components than those shown, or some components may be combined, or have different component arrangements.

FIG. 2 depicts a flowchart showing a method for handover between base stations according to an embodiment of the present disclosure. The method includes but is not limited to operation S200, operation S210, operation S220 and operation S230.

At operation S200, a user equipment (UE) generates a channel resource report and sends the channel resource report to a source base station.

At operation S210, the source base station generates a handover command according to the channel resource report and sends the handover command to a target base station.

At operation S220, the target base station acquires the first connectivity status between the target base station and an Access and Mobility Management Function (AMF) corresponding to an AMF identifier according to the AMF identifier carried in the handover command.

At operation S230, the target base station performs a handover by adopting a corresponding preset handover method according to the first connectivity status.

In this embodiment, the UE finds that the cell channel condition of the target base station is better, and generates and sends the channel resource report to the source base station to indicate that the cell channel condition of the target base station is better. The source base station receives the channel resource report from the UE and generates the handover command, and sends the generated handover command to a target base station. The handover command carries an AMF identifier. The target base station obtains the first connectivity status with the corresponding AMF according to the AMF identifier in the received handover command, and performs handover between base stations by adopting a corresponding preset handover method through the obtained first connectivity status. Thereby, the success rate of handover between base stations is improved and the user experience is enhanced.

In an embodiment, if it is determined that the target base station is disconnected from the first AMF but connected to the second AMF, Xn handover can be performed based on the second AMF since the first AMF and the second AMF are backup AMFs for each other. Thus, the success of the handover is ensured, and a good user experience is ensured. The signaling impact caused by turning to NG handover is avoided. If it is determined that the target base station is disconnected from the first AMF, but the first connectivity status with the second AMF is unknown, the second AMF informs the target base station to perform NG handover. In this way, the network failure of the UE due to the handover failure between base stations caused by disconnection of the first AMF from the target base station is prevented. The success rate of handover between base stations is improved, and the user experience is enhanced.

It should be noted that the above method for handover between base stations is applied to a telecommunication network architecture including a UE, a source base station, a first AMF, a target base station, and a second AMF. The source base station is connected to the UE. The first AMF is connected to the source base station. The first AMF is the serving AMF of the UE. The second AMF and the first AMF are backups for each other. The target base station is connected to the second AMF and the source base station. The target base station is disconnected from the first AMF.

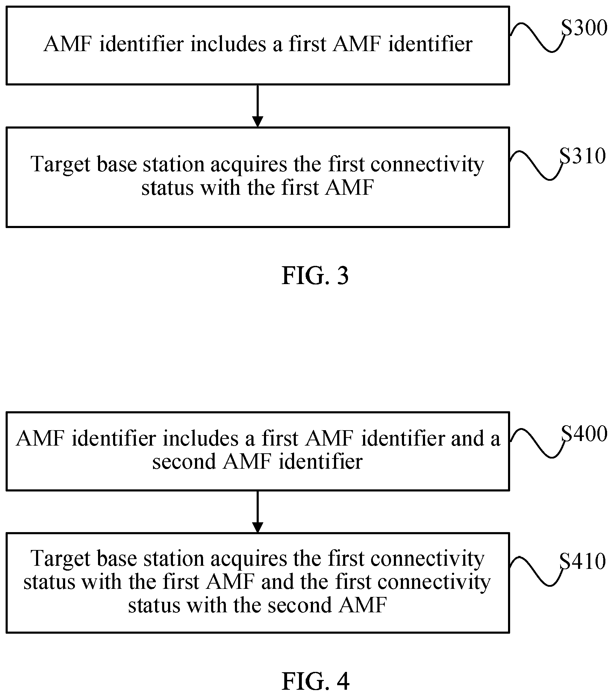

FIG. 3 depicts a flowchart showing a method for handover between base stations according to another embodiment of the present disclosure. The method includes but is not limited to operation S300 and operation S310.

At operation S300, the AMF identifier includes a first AMF identifier.

At operation S310, the target base station acquires the first connectivity status with the first AMF.

In this embodiment, when the AMF identifier includes the first AMF identifier, the target base station obtains the first connectivity status with the first AMF according to the first AMF identifier, and then determines whether Xn handover can be directly performed by means of the first AMF.

It should be noted that the first AMF identifier is the Globally Unique AMF Identifier (GUAMI).

FIG. 4 depicts a flowchart showing a method for handover between base stations according to another embodiment of the present disclosure. The method includes but is not limited to operation S400 and operation S410.

At operation S400, the AMF identifier includes a first AMF identifier and a second AMF identifier.

At operation S410, the target base station acquires the first connectivity status with the first AMF and the first connectivity status with the second AMF.

In this embodiment, when the AMF identifier includes the first AMF identifier and the second AMF identifier, the target base station obtains the first connectivity status with the first AMF according to the first AMF identifier and the first connectivity status with the second AMF according to the second AMF identifier, so as to determine whether the Xn handover can be directly performed by means of the first AMF or the second AMF.

It should be noted that the first AMF identifier is the globally unique AMF identifier (GUAMI) and the second AMF identifier is the backup AMF identifier.

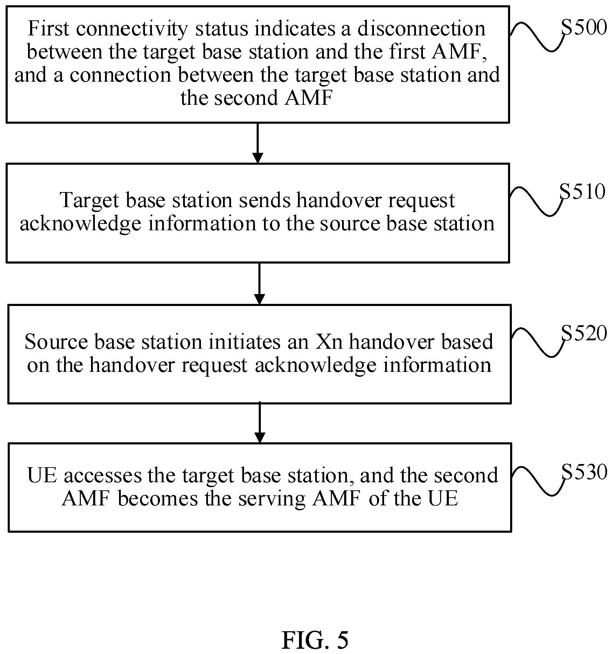

FIG. 5 depicts a flowchart showing a method for handover between base stations according to another embodiment of the present disclosure. The method includes but is not limited to operation S500, operation S510, operation S520 and operation S530.

At operation S500, the first connectivity status indicates a disconnection between the target base station and the first AMF, and a connection between the target base station and the second AMF.

At operation S510, the target base station sends handover request acknowledge information to the source base station.

At operation S520, the source base station initiates an Xn handover based on the handover request acknowledge information.

At operation S530, the UE accesses the target base station, and the second AMF becomes the serving AMF of the UE.

In this embodiment, the obtained first connectivity status indicates a disconnection between the target base station and the first AMF and a connection between the target base station and the second AMF. The first AMF and the second AMF are backup AMFs for each other. According to the 3GPP protocol, the UE context can be shared between the backup AMFs, indicating that both backup AMFs can handle the information of the same UE. At the same time, the 3GPP protocol also stipulates that Xn handover cannot be performed across AMFs, that is, Xn handover can only be performed within the same AMF. In conjunction with these two pieces of information, the AMFs that are backup AMFs for each other can process the message of the same UE because they share the UE context, which indicates that it is possible to perform Xn handover for the same UE between two AMFs that are backup AMFs for each other. Hence, even if the target base station is disconnected from the first AMF, the target base station can still perform Xn handover by means of the second AMF. Therefore, the target base station sends a HANDOVER REQUEST ACKNOWLEDGE to the source base station to confirm that the handover between base stations is possible. The source base station initiates an Xn handover based on the handover request acknowledge information. After the Xn handover is completed, the UE accesses the target base station and the second AMF becomes the serving AMF of the UE. In this way, the success of the handover can be ensured, the user experience can be guaranteed, and at the same time, the signaling impact caused by turning to NG handover can be avoided.

It should be noted that the above Xn handover includes, sending a Radio Resource Control (RRC) Reconfiguration message to the UE to indicate the handover. The UE sends an RRC reconfiguration complete message to the target base station. The target base station sends a PATH SWITCH message to the second AMF to request a path switch. The second AMF extracts the UE context of the UE, and proceeds with the handover, and responds to the target base station with PATHSWITCH REQUEST ACKNOWLEDGE message to indicate that the handover is completed.

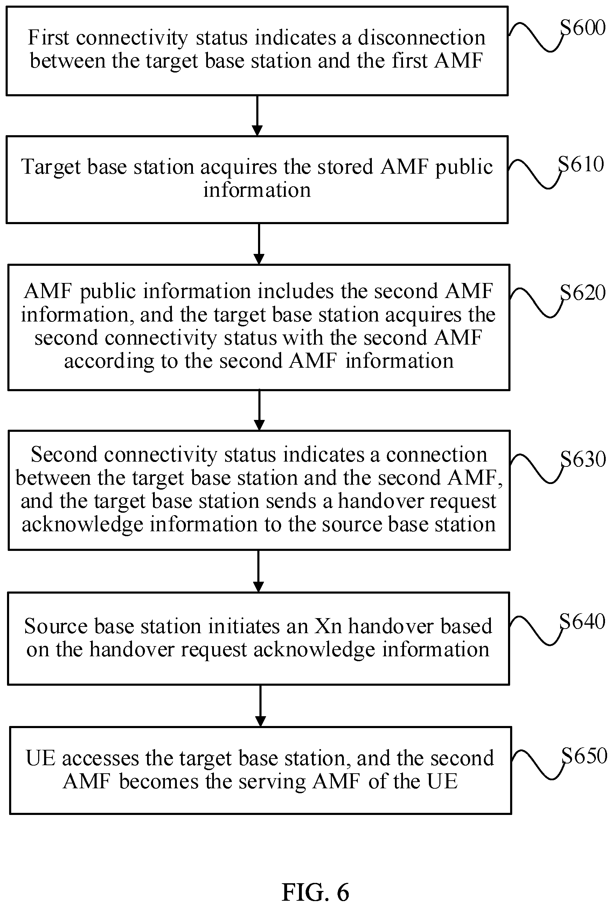

FIG. 6 depicts a flowchart showing a method for handover between base stations according to another embodiment of the present disclosure. The method includes but is not limited to operations S600, S610, S620, S630, S640, and S650.

At operation S600, the first connectivity status indicates a disconnection between the target base station and the first AMF.

At operation S610, the target base station acquires the stored AMF public information.

At operation S620, the AMF public information includes the second AMF information, and the target base station acquires the second connectivity status with the second AMF according to the second AMF information.

At operation S630, the second connectivity status indicates a connection between the target base station and the second AMF, and the target base station sends a handover request acknowledge message to the source base station.

At operation S640, the source base station initiates an Xn handover based on the handover request acknowledge information.

At operation S650, the UE accesses the target base station, and the second AMF becomes the serving AMF of the UE.

In this embodiment, when the obtained first connectivity status indicates the disconnection between the target base station and the first AMF, the target base station obtains the stored AMF public information. If the AMF public information includes the second AMF information, the target base station obtains the second connectivity status with the second AMF according to the second AMF information. The second connectivity status indicates the connection between the target base station and the second AMF. The first AMF and the second AMF are backup AMFs for each other. According to the 3GPP protocol, each of the backup AMFs can share the UE context, which indicates that each of the backup AMFs can handle the information of the same UE. At the same time, the 3GPP protocol also stipulates that Xn handover cannot be performed across AMFs, that is, Xn handover can only be performed within the same AMF. In conjunction with these two pieces of information, the AMFs that are backup AMFs for each other can process the message of the same UE because they share the UE context, which indicates that it is possible to perform Xn handover for the same UE between two AMFs that are backup AMFs for each other. Hence, even if the target base station is disconnected from the first AMF, the target base station can still perform Xn handover by means of the second AMF. Therefore, the target base station sends a HANDOVER REQUEST ACKNOWLEDGE to the source base station to confirm that the handover between base stations is possible. The source base station initiates an Xn handover based on the handover request acknowledge information. After the Xn handover is completed, the UE accesses the target base station and the second AMF becomes the serving AMF of the UE. In this way, the success of the handover can be ensured, the user experience can be guaranteed, and at the same time, the signaling impact caused by turning to NG handover can be avoided.

It should be noted that the above Xn handover includes, sending a Radio Resource Control (RRC) Reconfiguration message to the UE to indicate the handover. The UE sends an RRC reconfiguration complete message to the target base station. The target base station sends a path switching indication (PATH SWITCH) to the second AMF to request a path switch. The second AMF extracts the UE context of the UE, and proceeds with the handover, and responds to the target base station with PATHSWITCH REQUEST ACKNOWLEDGE message to indicate that the handover is completed.

In addition, it should be noted that the target base station obtains the above AMF public information in one of the following ways.

The source base station sends a handover command to the target base station. The handover command carries the AMF public information. The target base station obtains and stores the AMF public information.

Alternatively, before the UE generates a channel resource report and sends the channel resource report to the source base station, the source base station sends an Xn setup request command to the target base station. The Xn setup request command carries AMF public information. The target base station obtains and stores the AMF public information.

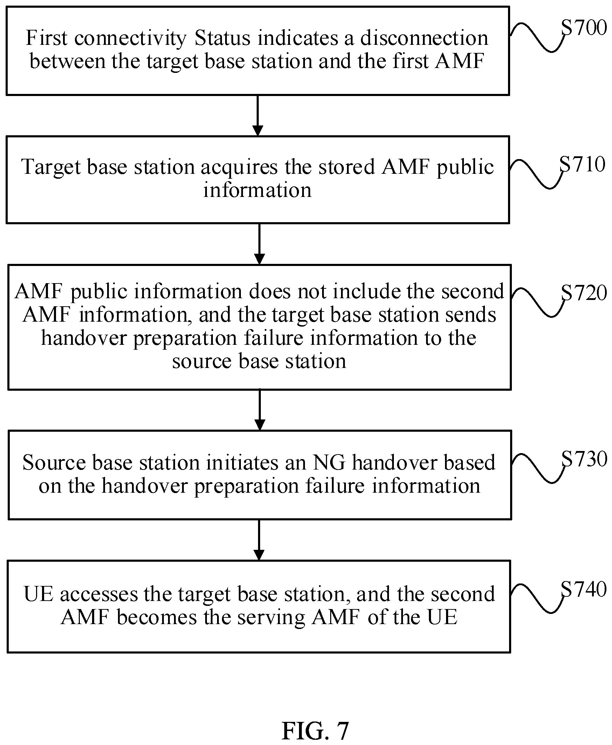

FIG. 7 depicts a flowchart showing a method for handover between base stations according to another embodiment of the present disclosure. The method includes but is not limited to operations S700, S710, S720, S730 and S740.

At operation S700, the first connectivity status indicates a disconnection between the target base station and the first AMF.

At operation S710, the target base station acquires the stored AMF public information.

At operation S720, the AMF public information does not include the second AMF information, and the target base station sends handover preparation failure information to the source base station.

At operation S730, the source base station initiates an NG handover based on the handover preparation failure information.

At operation S740, the UE accesses the target base station, and the second AMF becomes the serving AMF of the UE.

In this embodiment, when the obtained first connectivity status indicates a disconnection between the target base station and the first AMF, the target base station obtains the stored AMF public information. If the AMF public information does not include the second AMF information, the target base station cannot obtain the second connectivity status with the second AMF. The target base station then sends HANDOVER PREPARATION FAILURE information to the source base station. After receiving the handover preparation failure information, the source base station initiates an NG handover. After the NG handover is completed, the UE accesses the target base station and the second AMF becomes the serving AMF of the UE. In this way, the network failure of the UE due to the handover failure between base stations caused by the disconnection of the first AMF from the target base station is prevented. The success rate of handover between base stations is improved, and the user experience is enhanced.

It should be noted that the target base station obtains the above AMF public information in one of the following ways.

The source base station sends a handover command to the target base station. The handover command carries the AMF public information. The target base station obtains and stores the AMF public information.

Alternatively, before the UE generates a channel resource report and sends the channel resource report to the source base station, the source base station sends an Xn setup request command to the target base station. The Xn setup request command carries AMF public information. The target base station obtains and stores the AMF public information.

In addition, it should be noted that in this embodiment, the NG handover includes the following procedure. The source base station generates a HANDOVER REQUIRED message based on the handover preparation failure information, and sends the HANDOVER REQUIRED message to the first AMF. The first AMF finds the disconnection with the target base station, and forwards the HANDOVER REQUIRED message to the second AMF by creating a UE context command (Namf_Communication_Create UE Context Request). The second AMF queries the UE context according to the HANDOVER REQUIRED message and sends the handover request information to the target base station. The target base station regularly performs the NG handover, and responds to the second AMF with HANDOVER REQUEST ACKNOWLEDGE. The second AMF sends a UE context response command (Namf_Communication_Create UE Context Response) to the first AMF. The first AMF responds to the source base station with a HANDOVER COMMAND. The source base station sends an RRC reconfiguration message (Radio Resource Control Reconfiguration) to the UE to indicate the UE of the handover. The UE sends an RRC reconfiguration complete message (Radio Resource Control Reconfiguration Complete) to the target base station. The target base station sends HANDOVER NOTIFY information to the second AMF, and the handover is completed.

In addition, in another embodiment, the NG handover as discussed above includes the following procedure. The source base station generates a HANDOVER REQUIRED message based on the handover preparation failure information, and sends the HANDOVER REQUIRED message to the second AMF. The second AMF queries the UE context according to the HANDOVER REQUIRED message and sends the handover request information to the target base station. The target base station regularly performs the NG handover, and responds to the second AMF with HANDOVER REQUEST ACKNOWLEDGE. The second AMF sends a UE context response command (Namf_Communication_Create UE Context Response) to the first AMF. The first AMF responds to the source base station with a HANDOVER COMMAND. The source base station sends an RRC reconfiguration message (Radio Resource Control Reconfiguration) to the UE to indicate the UE of the handover. The UE sends an RRC reconfiguration complete message (Radio Resource Control Reconfiguration Complete) to the target base station. The target base station sends HANDOVER NOTIFY information to the second AMF, and the handover is completed.

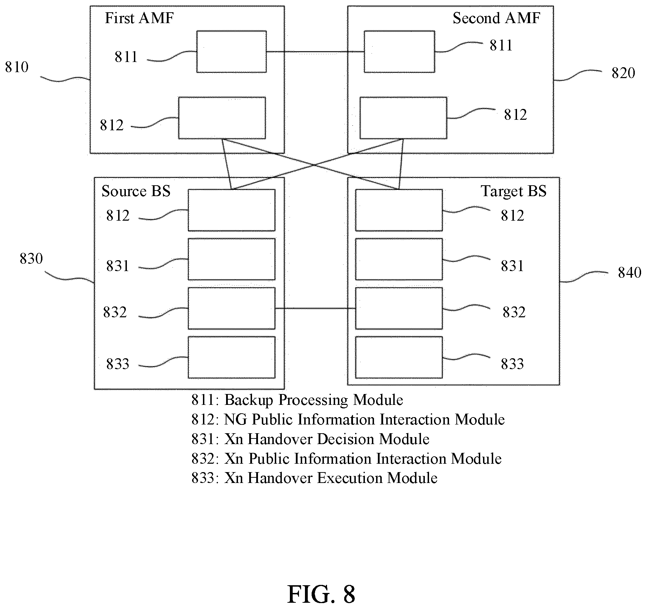

FIG. 8 depicts a schematic diagram showing a base station and an AMF according to an embodiment of the present disclosure. In an embodiment of the present disclosure, each of the first AMF and the second AMF includes a backup processing module 811 and an NG public information interaction module 812. Each of the source base station and the target base station includes an NG public information interaction module 812, an Xn handover decision module 831, an Xn public information interaction module 832, and an Xn handover execution module 833.

It should be noted that in this embodiment, the NG public information interaction module 812 in the first AMF and the second AMF is configured to exchange public information with the source base station or the target base station. The backup processing module 811 is configured to manage the backup AMFs. The Xn public information interaction module 832 in the source base station and the target base station is configured to interact information with the connected base stations through the Xn link. The NG public information interaction module 812 is configured to interact public information with an AMF. The Xn handover decision module 831 is configured to decide whether Xn handover can be performed. The Xn handover execution module 833 is configured to perform the Xn handover. The backup processing modules 811 in the first AMF and the backup processing module 811 in the second AMF are connected to each other. The NG public information interaction modules 812 in the first and second AMFs, and those in the source and target base stations are connected with each other. Xn public information interaction modules 832 in the source and target base stations station are connected with each other.

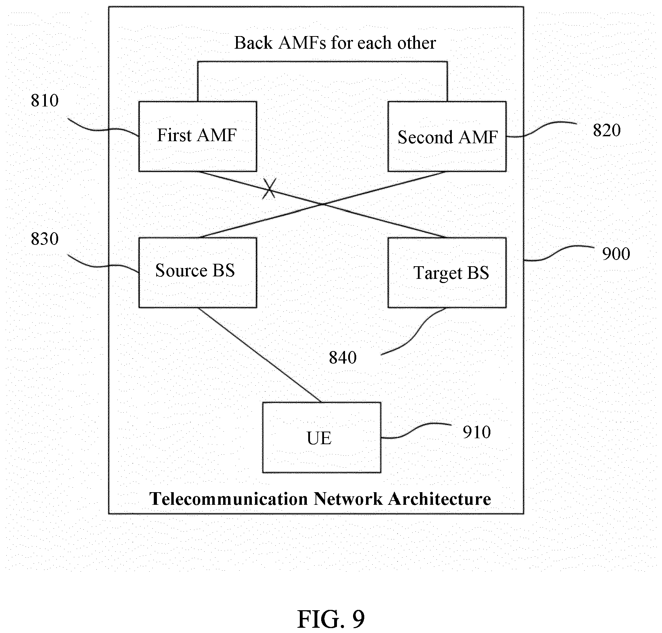

FIG. 9 depicts a schematic diagram showing a telecommunication network architecture according to an embodiment of the present disclosure.

As shown in FIG. 9, and in conjunction with FIG. 8, according to an embodiment, the telecommunication network architecture 900 includes one or more UEs 910, one or more source base stations 830, one or more first AMFs 810, one or more second AMFs 820 and one or more target base stations 840. FIG. 9 shows one UE 910, one source base station 830, one first AMF 810, one second AMF 820, and one target base station 840 by way of an example.

As shown in FIG. 9, the telecommunication network architecture includes a UE 910, a source base station 830, a first AMF 810, a target base station 840, and a second AMF 820. The source base station 830 is connected to the UE 910. The first AMF 810 is connected with the source base station 830. The first AMF 810 is the serving AMF of the UE 910. The second AMF 820 and the first AMF 810 are backup AMFs for each other. The target base station 840 is connected with the second AMF 820 and the source base station 830. The target base station 840 is disconnected from the first AMF 810.

The UE 910 is configured to generate a channel resource report and send the channel resource report to the source base station 830.

The source base station 830 is configured to generate a handover command according to the channel resource report and send the handover command to the target base station 840. The handover command carries the AMF identifier.

The target base station 840 is configured to obtain the first connectivity status between the target base station 840 and the AMF corresponding to the AMF identifier according to the AMF identifier in the handover command.

The target base station 840 is configured to perform a handover in a corresponding preset handover method according to the first connectivity status.

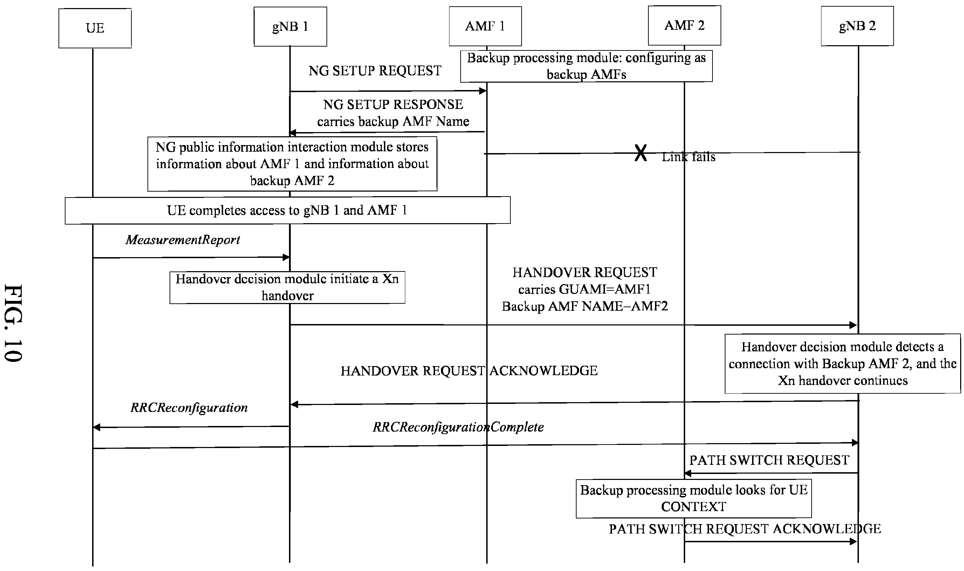

FIG. 10 depicts a flowchart showing the overall process of a method for handover between base stations according to an embodiment of the present disclosure. As shown in FIG. 10 in conjunction with FIGS. 8 and 9, according to an embodiment of the present disclosure, AMF 1 and AMF 2 are configured as backup AMFs for each other. The backup processing module 811 correctly maintains the Backup AMF information. The NG public information interaction module 812 of gNB1 sends an NG SETUP REQUEST message to AMF 1, requesting an setup of an NG link. The NG public information interaction module 812 of AMF1 stores the information about gNB1, obtains the Backup AMF information from the backup processing module 811, and notifies the Backup AMF information to gNB1 through the Backup AMF Name IE (backup AMF identifier) of NG SETUP RESPONSE message. The NG public information interaction module 812 of gNB1 stores information about AMF 1, including the Backup AMF information of AMF 1. The UE completes the access in gNB1 and AMF 1. AMF 1 is the serving AMF of the UE. The gNB1 receives the Measurement Report (channel resource report) reported by the UE, which indicates a better channel condition in another cell. The Xn handover decision module 831 of gNB1 decides to perform an Xn handover. The Xn handover execution module 833 of gNB1 initiates a HANDOVER REQUEST (handover command) message, and sends backup AMF information of AMF 1 indicating the backup AMF is AMF 2 to gNB2 through globally unique AMF identifier (GUAMI IE) and backup AMF identifier (Backup AMF Name IE). The Xn handover decision module 831 of gNB 1 finds that this station is connected with the backup AMF 2, and decides that the Xn handover can be continued. The Xn handover execution module 833 of gNB1 replies a HANDOVER REQUEST ACKNOWLEDGE message. The Xn handover execution module 833 of gNB1, after receiving the HANDOVER REQUEST ACKNOWLEDGE, sends an RRC Reconfiguration message to the UE to indicate the UE of the handover. The UE sends an RRC Reconfiguration Complete message to gNB2. The Xn handover execution module 833 of gNB1 sends a Path switch (path switch command) to AMF 2 to request a path switching. The backup processing module 811 of AMF 2 extracts the Context of the UE, continues to execute the handover, and replies the PATHSWITCH REQUEST ACKNOWLEDGE to gNB1, and the handover is completed.

It should be noted that AMF 1 shown in FIG. 10 is the first AMF 810, AMF 2 is the second AMF 820, gNB1 is the source base station 830, gNB2 is the target base station 840 and UE is the UE 910.

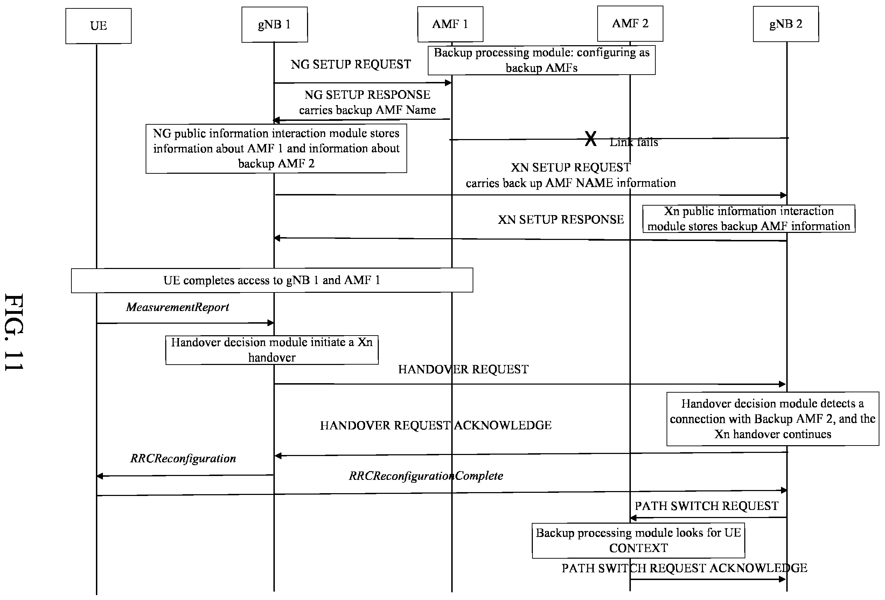

FIG. 11 depicts a flowchart showing the overall process of a method for handover between base stations according to an embodiment of the present disclosure. As shown in FIG. 11 in conjunction with FIGS. 8 and 9, according to an embodiment of the present disclosure, AMF 1 and AMF 2 are configured as backup AMFs for each other. The backup processing module 811 correctly maintains the Backup AMF information. The NG public information interaction module 812 of gNB1 sends an NG SETUP REQUEST to AMF 1, requesting an setup of an NG link. The NG public information interaction module 812 of AMF1 stores the information about gNB1, obtains the Backup AMF information from the backup processing module 811, and notifies the Backup AMF information to gNB1 through the Backup AMF Name IE (backup AMF identifier) of NG SETUP RESPONSE message. The NG public information interaction module 812 of gNB1 stores information about AMF 1, including the Backup AMF information of AMF 1. The Xn public information interaction module 832 of gNB1 obtains the Backup AMF information, and notifies gNB1 of the corresponding Backup AMF information for each AMF through the Backup AMF Name IE of the XN SETUP REQUEST message. The Xn public information interaction module 832 of gNB1 stores the information of gNB1 and stores the Backup AMF information of AMF 1 indicating the backup AMF is AMF 2. The UE completes the access in gNB1 and AMF 1. AMF 1 is the serving AMF of the UE. gNB 1 receives the Measurement Report (channel resource report) reported by the UE, which indicates a better channel condition in another cell. The Xn handover decision module 831 of gNB 1 decides to perform an Xn handover. The Xn handover execution module 833 of gNB1 initiates a HANDOVER REQUESET (handover command) message, and sends information of AMF 1 to gNB2 through globally unique AMF identifier (GUAMI IE). The Xn handover decision module 831 of gNB1 acquires the Backup AMF information from the Xn public information interaction module 832, and finds that this station is not connected with the AMF1 as indicated by the GUAMI, but is connected with the backup AMF 2, and decides that the Xn handover can be continued. The Xn handover execution module 833 of gNB2 replies a HANDOVER REQUEST ACKNOWLEDGE message. The Xn handover execution module 833 of gNB1, after receiving the HANDOVER REQUEST ACKNOWLEDGE, sends an RRC Reconfiguration message to the UE to indicate the UE of the handover. The UE sends an RRC Reconfiguration Complete message to gNB2. The Xn handover execution module 833 of gNB2 sends a Path switch (path switch command) to AMF 2 to request a path switching. The backup processing module 811 of AMF 2 extracts the Context of the UE, continues to execute the handover, and replies to gNB2 with the PATHSWITCH REQUEST ACKNOWLEDGE message, and the handover is completed.

It should be noted that AMF 1 shown in FIG. 11 is the first AMF 810, AMF 2 is the second AMF 820, gNB 1 is the source base station 830, gNB 2 is the target base station 840 and UE is the UE 910.

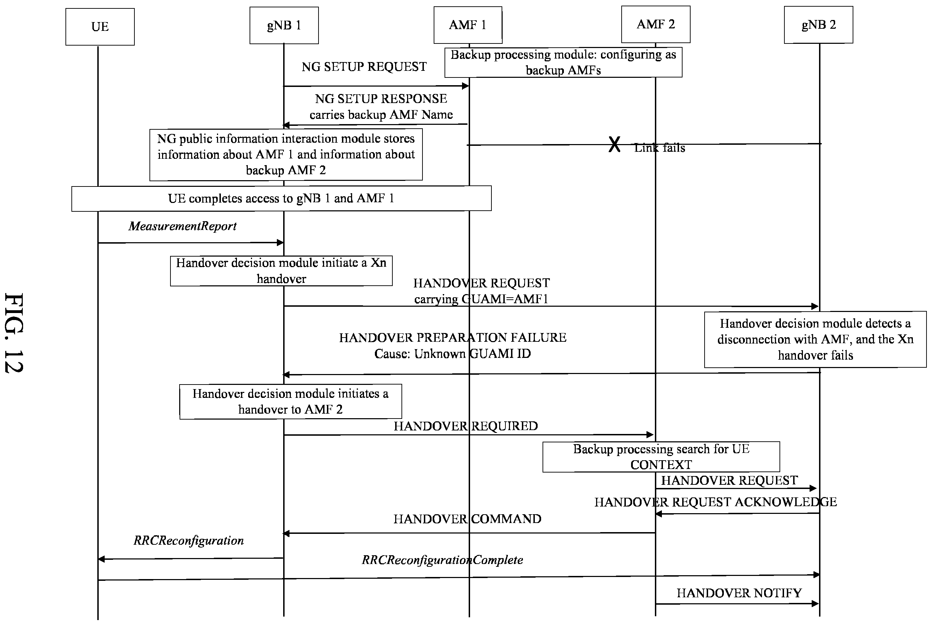

FIG. 12 depicts a flowchart showing an overall process of a method for handover between base stations according to an embodiment of the present disclosure. As shown in FIG. 12 in conjunction with FIGS. 8 and 9, according to an embodiment of the present disclosure, AMF 1 and AMF 2 are configured as backup AMFs for each other. The backup processing module 811 correctly maintains the Backup AMF information. The NG public information interaction module 812 of gNB1 sends an NG SETUP REQUEST to AMF 1, requesting an establishment of an NG link. The NG public information interaction module 812 of AMF 1 stores the information about gNB1, obtains the Backup AMF information from the backup processing module 811, and notifies the Backup AMF information to gNB1 through the Backup AMF Name IE (backup AMF identifier) of NG SETUP RESPONSE message. The NG public information interaction module 812 of gNB1 stores information about AMF 1, including the Backup AMF information of AMF 1. UE completes access in gNB 1 and AMF 1, and AMF 1 is the serving AMF of the UE. GNB1 received a Measurement Report (channel resource report) reported by the UE, which indicates a better channel condition of another cell. The Xn handover decision module 831 of gNB 1 decides to perform the Xn handover. The Xn handover execution module 833 of gNB 1 initiates a HANDVER REQUESET (handover command) message, and sends information about AMF 1 to gNB 2 through the globally unique AMF identifier (GUAMI IE). The Xn handover decision module 831 of gNB2 detects a disconnection with AMF 1, such that the Xn handover can not be completed. The Xn handover execution module 833 of gNB2 responds with a Handover Preparation Failure message, carrying the cause as Unknown GUAMI ID (unknown globally unique AMF identifier). After receiving the Handover Preparation Failure message, the Xn handover execution module 833 of gNB 1 continues to attempt to initiate a handover to the Backup AMF. gNB 1 initiates a HANDOVER REQUIRED message to AMF 2. The backup processing module 811 of AMF 2 looks up the UE CONTEXT and initiates a HANDOVER REQUEST to gNB 2. The gNB2 performs NG handover regularly and responds to AMF 2 with a HANDOVER REQUEST ACKNOWLEDGE. AMF 2 responds to gNB 1 with a HANDOVER COMMAND (indicating the handover is possible). gNB 1 sends an RRC Reconfiguration message to UE to indicate the UE of the handover. The UE sends the RRC Reconfiguration Complete message to gNB 2. gNB2 sends a HANDOVER NOTIFY message to AMF 2, and the switch is completed.

It should be noted that AMF 1 shown in FIG. 12 is the first AMF 810, AMF 2 is the second AMF 820, gNB1 is the source base station 830, gNB2 is the target base station 840 and UE is the UE 910.

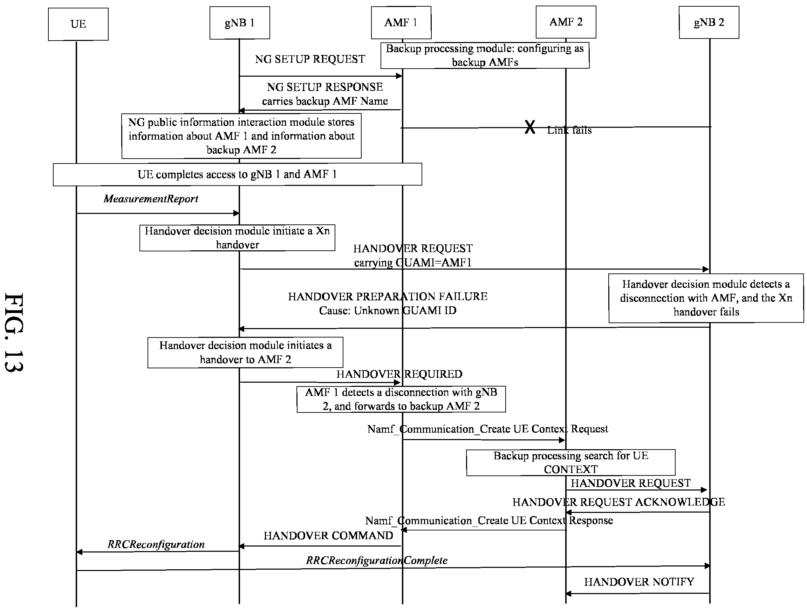

FIG. 13 depicts a flowchart showing the overall process of a method for handover between base stations according to an embodiment of the present disclosure. As shown in FIG. 13 in conjunction with FIGS. 8 and 9, according to an embodiment of the present disclosure, AMF 1 and AMF 2 are configured as backup AMFs for each other. The backup processing module 811 correctly maintains the Backup AMF information. The NG public information interaction module 812 of gNB1 sends an NG SETUP REQUEST to AMF 1, requesting an establishment of an NG link. The NG public information interaction module 812 of AMF 1 stores the information about gNB1, obtains the Backup AMF information from the backup processing module 811, and notifies the Backup AMF information to gNB 1 through the Backup AMF Name IE (backup AMF identifier) of NG SETUP RESPONSE message. The NG public information interaction module 812 of gNB1 stores information about AMF 1, including the Backup AMF information of AMF 1. UE completes access in gNB1 and AMF 1. AMF1 is the serving AMF of UE. gNB 1 receives a Measurement Report (channel resource report) from UE, indicating a better channel condition of another cell. The Xn handover decision module 831 of gNB1 decides to perform an Xn handover. The Xn handover execution module 833 of gNB1 initiates a HANDOVER REQUEST message, and sends information about AMF1 to gNB2 through the GUAMI IE (globally unique AMF identifier). If the Xn handover decision module 831 of gNB 2 detects a disconnection with AMF 1, it is not possible to perform the Xn handover. The Xn handover execution module 833 of gNB 2 responds with a Handover Preparation Failure message, carrying the cause as Unknown GUAMI ID (unknown globally unique AMF identifier). After receiving the Handover Preparation Failure message, the Xn handover execution module 833 of gNB 1 continues to attempt to initiate an NG handover to AMF1 and send a HANDOVER REQUIRED message. If AMF1 detects a disconnection with gNB2, AMF 1 forwards the handover message to Backup AMF through Namf_Communication_Create UE Context Request. The backup processing module 811 of AMF 2 looks for UE CONTEXT and initiates a HANDOVER REQUEST to gNB2. The gNB2 performs NG handover regularly and responds to AMF 2 with HANDOVER REQUEST ACKNOWLEDGE. AMF 2 sends Namf_Communication_Create UE Context Response to AMF 1. AMF 1 responds to gNB 1 with a HANDOVER COMMAND. The gNB 1 sends RRC Reconfiguration (Radio Resource Control Reconfiguration) messages to the UE to indicate the UE of the handover. UE sends the RRC Reconfiguration Complete (Radio Resource Control Reconfiguration Complete) message to gNB2. gNB2 sends a HANDOVER NOTIFY message to AMF 2, and the handover is completed.

It should be noted that AMF 1 shown in FIG. 13 is the first AMF 810, AMF 2 is the second AMF 820, gNB1 is the source base station 830, gNB2 is the target base station 840 and UE is the UE 910.

Based on the above-described method for handover between base stations, several embodiments regarding a controller, and a computer-readable storage medium are provided below.

According to an embodiment, a controller is provided. The controller includes a processor, a memory, and a computer program stored on the memory and executable by the processor.

The processor and the memory can be connected by a bus or other means.

It shall be noted that, the controller in this embodiment can correspond to the processor and memory in the embodiment shown in FIG. 1, both of which belong to the same concept, so they have the same implementing principle and beneficial effects, and will not be described in detail here.

Non-transitory software programs and instructions for the method in the above embodiments are stored in memory which, when executed by the processor, causes the processor to carry out the method for handover between base stations in any one of the embodiments described above.

It is to be noted that the implementation and corresponding technical effects of the controller in this embodiment of the present disclosure correspond to the embodiments as described with respect to the method for handover between base stations above, due to the controller that is included in the terminal device for implementing the method for handover between base stations.

According to an embodiment of the present disclosure, a computer-readable storage medium is provided. The computer-readable storage medium stores computer-executable instructions which, when executed by processor or a controller, for example, by a processor in the embodiment concerning the controller, causes the processor to carry out the operations of the method for handover between base stations described above, for example, the above-described operations S200 to S230 described in conjunction with FIG. 2, S300 to S310 described in conjunction with FIG. 3, S400 to S410 described in conjunction with FIG. 4, S500 to S530 described in conjunction with FIG. 5, S600 to S640 described in conjunction with FIG. 6, or S700 to S740 described in conjunction with FIG. 7.

According to an embodiment, a method for handover between base stations is provided. The method is applied to the telecommunication network architecture including a UE, a source base station, a first AMF, a target base station, and a second AMF. The source base station is connected to the UE. The first AMF is connected to the source base station. The first AMF is the serving AMF of the UE. The second AMF and the first AMF are backup AMFs for each other. The target base station is connected to the second AMF and the source base station. The target base station is disconnected from the first AMF. Before the handover is performed, the UE generates a channel resource report and sends the channel resource report to the source base station. The source base station generates a handover command according to the channel resource report and sends the handover command to the target base station. The handover command carries an AMF identifier. The target base station obtains a first connectivity status between the target base station and the AMF corresponding to the AMF identifier, according to the AMF identifier carried in the handover command. The target base station performs a handover by adopting a corresponding preset handover method according to the first connectivity status. According to the scheme set forth in an embodiment, the UE finds that the cell channel condition of the target base station is better, and generates and sends the channel resource report to the source base station to indicate that the cell channel condition of the target base station is better. The source base station receives a channel resource report from the UE and generates a handover command, and sends the generated handover command to the target base station. The handover command carries an AMF identifier. The target base station obtains a first connectivity status with the corresponding AMF according to the AMF identifier in the received handover command, and performs handover between base stations by adopting a corresponding preset handover method through the obtained first connectivity status. If it is determined that the target base station is disconnected from the first AMF but is connected to the second AMF, Xn handover can performed based on the second AMF since the first AMF and the second AMF are backup AMFs for each other. Thus, the success of the handover is ensured and a good user experience is ensured. The signaling impact caused by turning to NG handover is avoided. If it is determined that the target base station is disconnected from the first AMF, but the first connectivity status with the second AMF is unknown, the source base station sends a HANDOVER REQUIRED message to the second AMF to inform the target base station to perform an NG handover. Alternatively, the source base station sends the HANDOVER REQUIRED message to the second AMF via the relay of the first AMF to inform the target base station to perform an NG handover. In this way, the network failure of the UE due to the handover failure between base stations caused by the disconnection of the first AMF from the target base station is prevented. The success rate of handover between base stations is improved, and the user experience is enhanced.

It shall be appreciated by a person having ordinary skills in the art that all or some of the steps and systems disclosed above can be implemented as software, firmware, hardware and their appropriate combinations. Some or all physical components can be implemented as software executed by a processor, such as a central processing unit, a digital signal processor or a microprocessor, or as hardware, or as an integrated circuit, such as an application-specific integrated circuit. Such software can be distributed on computer-readable media, which can include computer storage media (or non-transitory media) and communication media (or transitory media). As is well known to a person having ordinary skills in the art, the term computer storage media includes volatile and nonvolatile, removable and non-removable media implemented in any method or technology for storing information such as computer-readable instructions, data structures, program modules or other data. Computer storage medium includes, but is not limited to, RAM, ROM, EEPROM, flash memory or other memory technologies, CD-ROM, digital versatile disks ((DVD) or other optical disk storage, magnetic boxes, tapes, magnetic disk storage device or other magnetic storage device, or any other medium that can be configured to store desired information and accessible by a computer. Furthermore, it is well known to those having ordinary skills in the art that communication media usually contains computer-readable instructions, data structures, program modules or other data in modulated data signals such as carrier waves or other transmission mechanisms, and can include any information delivery media.

Described above is a description of several embodiments of the present disclosure, but the present disclosure is not limited to the above embodiments. Those having ordinary skills in the art can make various equivalent modifications or substitutions without departing the scope of the present disclosure, and these equivalent modifications or substitutions are within the scope defined by the claims of the present disclosure.

## Claims

1. A method for handover between base stations, applied to a telecommunication network architecture comprising a user equipment (UE), a source base station, a first access and mobility management function (AMF), a target base station, and a second AMF;
wherein, the source base station is connected with the UE, the first AMF is connected with the source base station, the first AMF is a serving AMF of the UE, the second AMF and the first AMF are backup AMFs for each other, the target base station is connected with the second AMF and the source base station, and the target base station is disconnected from the first AMF; the method comprises,
generating, by the UE, a channel resource report, and sending by the UE, the channel resource report to the source base station;
generating, by the source base station, a handover command according to the channel resource report, and sending, by the source base station, the handover command to the target base station, wherein the handover command carries an AMF identifier;
acquiring, by the target base station, a first connectivity status between the target base station and an AMF corresponding to the AMF identifier, according to the AMF identifier carried in the handover command; and
performing a handover, by the target base station, by adopting a corresponding preset handover method according to the first connectivity status.

2. The method according to claim 1, wherein the AMF identifier comprises a first AMF identifier or comprises the first AMF identifier and a second AMF identifier; accordingly, acquiring, by the target base station, the first connectivity status between the target base station and the AMF corresponding to the AMF identifier according to the AMF identifier carried in the handover command, comprising:
acquiring, by the target base station, the first connectivity status with the first AMF, in response to an inclusion of the first AMF identifier within the AMF identifier; and
acquiring, by the target base station, the first connectivity status with the first AMF, and the first connectivity status with the second AMF, in response to an inclusion of both the first AMF identifier and the second AMF identifier within the AMF identifier.

3. The method according to claim 1, wherein when the first connectivity status indicates a disconnection between the target base station and the first AMF, and a connection between the target base station and the second AMF, performing the handover by adopting the corresponding preset handover method comprises:
sending, by the target base station, handover request acknowledge information to the source base station;
initiating, by the source base station, an Xn handover based on the handover request acknowledge information; and
assessing the target base station, by the UE, after the Xn handover is completed, such that the second AMF to become the serving AMF of the UE.

4. The method according to claim 1, wherein when the first connectivity status indicates a disconnection between the target base station and the first AMF, performing the handover by adopting the corresponding preset handover method comprises:
acquiring, by the target base station, stored AMF public information;
acquiring, by the target base station, a second connectivity status with the second AMF according to second AMF information, in response to an inclusion of the second AMF information within the AMF public information;
sending, by the target base station, a handover request acknowledge information to the source base station, in response to the second connectivity status indicating a connection between the target base station and the second AMF;
initiating, by the source base station, an Xn handover based on the handover request acknowledge information; and
assessing the target base station, by the UE, after the Xn handover is completed, the second AMF becomes the serving AMF of the UE.

5. The method according to claim 1, wherein when the first connectivity status indicates a disconnection between the target base station and the first AMF, performing the handover by adopting the corresponding preset handover method comprises:
acquiring, by the target base station, stored AMF public information;
sending, by the target base station, handover preparation failure information to the source base station, in response to an exclusion of the second AMF information within the AMF public information;
initiating, by the source base station, an NG handover based on the handover preparation failure information; and
assessing the target base station, by the UE, after the NG handover is completed, such that the second AMF becomes the serving AMF of the UE.

6. The method according to claim 5, wherein the NG handover comprises:
generating, by the source base station, a HANDOVER REQUIRED message based on the handover preparation failure information, and sending, by the source base station, the HANDOVER REQUIRED message to the first AMF;
forwarding, by the first AMF, the HANDOVER REQUIRED message to the second AMF; and
looking up, by the second AMF, for a UE context of the UE according to the HANDOVER REQUIRED message, and sending by the second AMF, handover request information to the target base station.

7. The method according to claim 5, wherein the NG handover comprises:
generating, by the source base station, a HANDOVER REQUIRED message based on the handover preparation failure information, and sending, by the source base station, the HANDOVER REQUIRED message to the second AMF;
looking up, by the second AMF, for a UE context of the UE according to the HANDOVER REQUIRED message, and sending by the second AMF, handover request information to the target base station.

8. The method according to claims 4 or 5, wherein the target base station acquires the AMF public information via one of
the handover command sent by the source base station to the target base station, wherein the handover command carries the AMF public information, such that the target base station obtains and stores the AMF public information; or
an Xn setup request command sent by the source base station to the target base station before the UE generates the channel resource report and sends the channel resource report to the source base station; wherein the Xn setup request command carries AMF public information, such that the target base station obtains and stores the AMF public information.

9. A telecommunication network architecture, comprising a user equipment (UE), a source base station, a first access and mobility management function (AMF), a target base station, and a second AMF; wherein, the source base station is connected with the UE, the first AMF is connected with the source base station, the first AMF is a serving AMF of the UE, the second AMF and the first AMF are backup AMFs for each other, the target base station is connected with the second AMF and the source base station, and the target base station is disconnected from the first AMF;
the UE is configured to generate a channel resource report and send the channel resource report to the source base station;
the source base station is configured to generate a handover command according to the channel resource report and send the handover command to the target base station; and the handover command carries an AMF identifier;
the target base station is configured to obtain according to the AMF identifier carried in the handover command, the first connectivity status between the target base station and a AMF corresponding to the AMF identifier; and
the target base station is configured to perform a handover by adopting a corresponding preset handover method according to the first connectivity status.

10. A controller, comprising a memory, a processor, and a computer program stored in the memory and executable by the processor which, when executed by the processor causes the processor to carry out the method according to any one of claims 1 to 8.

11. A computer-readable storage medium storing a computer-executable instruction which, when executed by a processor, causes the processor to carry out the method according to any one of claims 1 to 8.
